# EUROPEAN PATENT SPECIFICATION

(11) **EP 4 619 288 B1**
(45) Date of publication and mention of the grant of the patent: **23.09.2026**
(21) Application number: 22817939.6
(22) Date of filing: 15.11.2022
(51) Int. Cl.: B60W 40/12, B60W 30/165, G08G 1/00

(54) **VEHICLE STATUS EVALUATION**
FAHRZEUGSTATUSBEWERTUNG
ÉVALUATION DE L'ÉTAT D'UN VÉHICULE

(43) Date of publication of application: 24.09.2025
(73) Proprietor: VOLVO TRUCK CORPORATION, 405 08 Göteborg (SE)
(72) Inventor: GELSO, Esteban, 421 51 VÄSTRA FRÖLUNDA (SE); SADEGHI KATI, Maliheh, 433 46 PARTILLE (SE); LAINE, Leo, 438 94 HÄRRYDA (SE)
(74) Representative: Ström & Gulliksson AB
(86) International application number: PCT/EP2022/081888
(87) International publication number: WO 2024/104562

(56) References cited:
- CN-A- 112 447 040
- DE-A1- 102007 040 165
- US-A1- 2009 160 679
- US-A1- 2019 179 335

## Description

### TECHNICAL FIELD

The disclosure relates generally to vehicle control. In particular aspects, the disclosure relates to vehicle status evaluation in relation to the order of vehicle units and/or the order of wheel axles. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Vehicle control generally includes any approach to operating a vehicle. Vehicle operation may comprise interaction - through user interface devices - between a human operator and control systems of the vehicle. Alternatively or additionally, vehicle operation may comprise autonomous, or semi-autonomous, operation.

A dynamic model of the vehicle (e.g., including a kinematic model of the vehicle) may be applied for vehicle control; e.g., for vehicle motion management. Having an accurate dynamic model of the vehicle typically improves the control of the vehicle. In scenarios where the vehicle status is - at least partially - unknown and/or dynamically changing, the dynamic model of the vehicle may be inaccurate.

Therefore, there is a need for approaches to obtain information regarding the vehicle status.

DE 10 2007 040 165 A1 describes a method for operating a vehicle association, wherein the order of the vehicles can be determined.

### SUMMARY

Various aspects may aim to solve or mitigate, alleviate, or eliminate at least some of the above or other disadvantages.

Therefore a computer-implemented method according to claim 1, a computer program product according to claim 11, a non-transitory computer-readable storage medium according to claim 12, an apparatus according to claim 13 are provided.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.

Further aims, features and advantages will appear from the detailed description, with reference being made to the accompanying drawings.

The drawings are not necessarily to scale, emphasis instead being placed upon illustrating the examples.
**FIG. 1A** is a flow chart of a method to detect order among vehicle units according to one example.
**FIG. 1B** is a flow chart of a method to detect order among wheel axles according to one example.
**FIG. 2** is a schematic drawing of a vehicle according to one example.
**FIG. 3** is a collection of schematic plots of motion data relating to different vehicle units according to one example.
**FIG. 4** is a schematic plot of vertical motion data relating to different wheel axles according to one example.
**FIG. 5** is a schematic block diagram of an apparatus according to one example.
**FIG. 6** is a schematic diagram of a computer system according to one example.
**FIG. 7** is a schematic drawing of a computer readable medium according to one example.
**FIG. 8** is a schematic block diagram of a control unit according to one example.

### DETAILED DESCRIPTION

Aspects set forth below represent the necessary information to enable those skilled in the art to practice the disclosure.

Examples of the present disclosure will be described more fully hereinafter with reference to the accompanying drawings. The solutions disclosed herein can, however, be realized in many different forms and should not be construed as being limited to the examples set forth herein.

In various situations, it may be beneficial to have information regarding the current status of the vehicle, which is as accurate as possible. For example, accurate vehicle status may be used to determine an accurate dynamic model of the vehicle, which may be applied for vehicle motion management and/or other types of vehicle control.

A dynamic model as referred to herein may comprise any suitable vehicle model; e.g., including two dimensional forces for each wheel, torque for each wheel, coupling forces, angles between vehicle units, etc.

This disclosure focuses on evaluation of the vehicle status in relation to the order of vehicle units and/or in relation to the order of wheel axles. This may be an important aspect of the vehicle status; especially when the situation in these regards is dynamically changing.

In some scenarios, vehicle units may be connected/de-connected/re-ordered automatically, leading to that the order of vehicle units changes dynamically. Thus, the number of vehicle units and/or their order may not be directly known. A first such example scenario is a logistics scenario, wherein loading/off-loading stops include automatic connection/de-connection of one or more vehicle unit. A second such example scenario is a dynamic traffic scenario, wherein autonomous vehicles may temporarily act as vehicle units in a train of vehicles (e.g., for traffic efficiency on a highway). In the second scenario, an autonomous vehicle may be dynamically inserted or appended to the train (e.g., in association with entering the highway via an entry ramp) and/or dynamically removed from the train (e.g., in association with exiting the highway via an exit ramp).

In some scenarios, wheel axles may be raised and/or lowered, either automatically or in response to an operator control input, leading to that the order of wheel axles changes dynamically. The raising/lowering of wheel axles may be at standstill or while the vehicle is in motion, as suitable. A first such example scenario is a logistics scenario, wherein loading/off-loading stops include adjustment of the selection of used wheel axles (e.g., depending on the weight and distribution of cargo). A second such example scenario is a traffic scenario, wherein dynamic evaluation of the driving conditions (e.g., state of the road, experienced grip, weather conditions, etc.) is used for adjustment of the selection of used wheel axles.

It should be understood that, even though the vehicle status information (order of vehicle units and/or order of wheel axles) is elaborated on herein in the context of determining an accurate dynamic model of the vehicle, other applications for the vehicle status information is not intended to be excluded.

For example, the order of vehicle units and/or order of wheel axles may be presented via a rendering unit of the vehicle; e.g., to provide an operator of the vehicle with continuous guidance for vehicle control.

Alternatively or additionally, the order of vehicle units may be provided to a logistics controller (which may be comprised in the vehicle or may be located externally to the vehicle); e.g., for planning of routes and/or loading/offloading actions.

Yet alternatively or additionally, when the multi-unit vehicle comprises a train of vehicles which are not physically attached to each other, the order of vehicle units may be provided to a traffic controller (which may be comprised in the vehicle or may be located externally to the vehicle); e.g., for planning of attach/release/reorder actions in relation to the vehicle units of the vehicle train.

Yet alternatively or additionally, the order of vehicle units may be used in relation to inputs from road map data that are position dependent; e.g., road curvature, road slope, road friction, etc. For example, which road map data slope to apply for a vehicle unit may depend on the position of the vehicle unit in a multi-unit combination vehicle; a slope which is currently valid for a first vehicle unit, may not yet be valid for a second - subsequent - vehicle unit.

Generally, a vehicle unit may refer to any suitable vehicle unit. For example, a vehicle unit may be a tractor unit or any type of trailer unit of a heavy-duty vehicle.

A multi-unit combination vehicle generally comprises two or more vehicle units.

Also generally, the vehicle units of a multi-unit combination vehicle may be physically attached to each other, or may be associated with each other via virtual attachment (e.g., wireless communication) as exemplified by a train of vehicles.

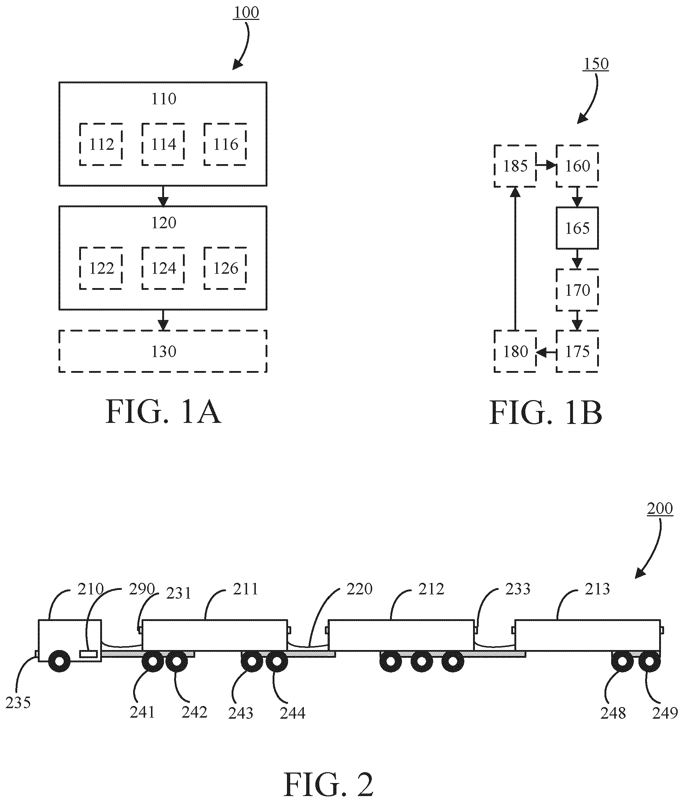

**FIG. 1A** illustrates an example method **100** for detection (determination) of order among vehicle units of a multi-unit combination vehicle; e.g., for automatic detection of order among vehicle units.

The method **100** may be a computer-implemented method, for execution by a processor device of a computer system. Typically, the processor device is mounted/mountable in one of the vehicle units; e.g., the tractor unit. However, it should be understood that the processor device may be external to the vehicle in some scenarios. For example, the processor device may be comprised in a server node; e.g., as part of a wireless communication network, a cloud computing network, an autonomous drive control network, or similar.

The method **100** comprises determining, by the processor device, at least two indications of order among the vehicle units, as illustrated by step **110.** The indications of order are determined by different procedures for detection (determination) of order among the vehicle units, as exemplified by optional sub-steps **112, 114, 116.**

One of the procedures for detection of order may comprise indicating the order among the vehicle units based on respective timing of corresponding motion data from the vehicle units. This is represented by optional sub-step **112,** which comprises determining the order among the vehicle units based on respective timing of corresponding motion data from the vehicle units. The method **100** may also comprise obtaining the motion data; e.g., receiving the motion data from one or more sensors of the respective vehicle units.

For example, by analyzing yaw rate and/or lateral acceleration and/or articulation angles during steering (e.g., steering of a tractor unit and one or more trailer unit(s)), and comparing the result between vehicle units, the relative timing of corresponding events may be seen as an indication of the order among vehicle units.

Alternatively or additionally, by analyzing longitudinal acceleration and/or speed during vehicle acceleration (e.g., starting from standstill, increasing speed, decreasing speed, braking, etc.), and comparing the result between vehicle units, the relative timing of corresponding events may be seen as an indication of the order among vehicle units. There is typically a delay between corresponding events for different vehicle units in relation to longitudinal motion; e.g., due to backlash effects in couplings, etc.

Typically, the determination in **112** may be based on timing of distinguishable events of the motion data (e.g., a distinct change in the motion data, such as an acceleration event). For example, when a distinguishable event occurs earlier in time for a first vehicle unit than for a second vehicle unit, it may be determined that the second vehicle unit occurs after the first vehicle unit in the order of vehicle units. Thus, a second vehicle unit may be indicated as occurring after a first vehicle unit in the order, responsive to a timing delay between motion data from the first vehicle unit and corresponding motion data from the second vehicle unit.

One or more type of motion data may be considered in **112.** Typically, the timing is compared for the same type of motion data in relation to the different vehicle units.

Some examples of motion data include longitudinal motion (e.g., longitudinal speed and/or longitudinal acceleration/retardation), lateral motion (e.g., lateral acceleration/retardation), yaw rate, articulation angle (e.g., in relation to another - preceding or subsequent - vehicle unit), other steering motion, and vertical motion (e.g., vertical acceleration and/or vertical load).

When several different types of motion data are considered in **112,** the result may be a corresponding amount of different indications of order among the vehicle units (i.e., one indication of order per type of motion data), or one or more the different types of motion data may be combined to determine a single indication of order among the vehicle units.

One of the procedures for detection of order may comprise indicating the order among the vehicle units based on environmental data captured by respective environmental sensors (e.g., camera, visual sensor, radar, lidar, distance detector, etc.) mounted on the vehicle units. This is represented by optional sub-step **114,** which comprises determining the order among the vehicle units based on environmental data. The method **100** may also comprise obtaining the environmental data; e.g., receiving the environmental data from sensors of the respective vehicle units. Generally, environmental data may include information from the vehicle and/or its surroundings.

Typically, the determination in **114** may be based on timing of distinguishable events of the environmental data (e.g., clearly distinguishable object in the environmental data, such as image identification of a traffic sign). For example, when a distinguishable event occurs earlier in time for a sensor of a first vehicle unit than for a sensor of a second vehicle unit, it may be determined that the second vehicle unit occurs after the first vehicle unit in the order of vehicle units. Thus, a second vehicle unit may be indicated as occurring after a first vehicle unit in the order, responsive to a timing delay between occurrence of an event in the environmental data from the first vehicle unit and occurrence of the event in the environmental data from the second vehicle unit.

Alternatively or additionally, the determination in **114** may be based on distinguishable identifiers on the vehicle units (e.g., a visually distinguishable identifier; such as an EAN-code, a QR-code, a registration number, or an identification number printed/mounted on the vehicle unit). Generally, an identifier on a vehicle unit may be regarded as an example of environmental data. When the identifier is distinguishable from behind a vehicle unit, a forward-facing sensor of the subsequent unit can detect it, and when the identifier is distinguishable from being in front of a vehicle unit, a backward-facing sensor of the preceding unit can detect it. Thus, a second vehicle unit may be indicated as occurring after a first vehicle unit in the order responsive to detection of an identifier of the first vehicle unit by a forward-facing sensor of the second vehicle unit. Alternatively or additionally, a first vehicle unit may be indicated as occurring before a second vehicle unit in the order responsive to detection of an identifier of the second vehicle unit by a backward-facing sensor of the first vehicle unit.

Similarly to what has been discussed for the motion data in **112,** one or more type of environmental data may be considered in **114.** Typically, the timing is compared for the same type of environmental data in relation to the different vehicle units.

One of the procedures for detection of order may comprise indicating the order among the vehicle units based on coupling data of communication wires (e.g., a Controller Area Network, CAN, bus) between the vehicle units. This is represented by optional sub-step **116,** which comprises determining the order among the vehicle units based on coupling data. The method **100** may also comprise obtaining the coupling data; e.g., receiving the coupling data from communication wire coupling ports of the respective vehicle units.

Typically, the determination in **116** may be based on knowledge regarding which end of a communication wire is connected to a leading unit and which end of a communication wire is connected to a following unit; e.g., for communication wires that are not reversibly connectable between vehicle units. For example, a second vehicle unit may be indicated as occurring after a first vehicle unit in the order responsive to the coupling data of a communication wire between the first and second vehicle units indicating the first vehicle unit as leading unit and/or indicating the second vehicle unit as following unit.

Alternatively or additionally, the determination in **116** may be based on timing of communication signals (e.g., control signals) propagating through the multi-unit vehicle. For example, since a control signal from the tractor reaches a first trailer before it reaches a subsequent trailer, signal detection reports from the trailers may be used to determine the order. A similar approach may be used for determining the order based on timing of communication signals conveyed from a trailer to the tractor.

It should be noted that performance of step **110** may be extended over time. For example, a distinguishable motion data even may not occur at the same time as a distinguishable environmental data event, a distinguishable vertical motion data event may not occur at the same time as a distinguishable longitudinal motion data event, etc. Thus, the at least two indications of order may be determined at different times and/or based on data received at different times.

The method **100** also comprises providing, by the processor device, the detection of order among the vehicle units (determining, by the processor device, the order among the vehicle units) based on the at least two indications of order, as illustrated by step **120.** In some examples the vehicle unit are assigned respective numbers corresponding to the detected order.

The detection of order may be based on the at least two indications of order in any suitable way.

For example, the order that occurs most often among the indications of order may be selected to represent the order among the vehicle units; i.e., a majority vote approach may be applied. This is illustrated by optional sub-step **122,** which comprises selecting an order that occurs most often among the indications of order. To exemplify, when three indications of order are used and they indicate vehicle unit orders as A-B-C, B-A-C, and B-A-C, respectively, the order may be provided as B-A-C.

Alternatively, the procedures for detection of order are associated with respective weights; e.g., representing different priorities. Then, a cumulative weight may be determined for each order that occurs among the indications, and the order that has the highest cumulative weight may be selected to represent the order among the vehicle units. This is illustrated by optional sub-steps **124, 126,** which comprises - respectively - determining a cumulative weight for each order that occurs among the indications of order, and selecting an order that has the highest cumulative weight. To exemplify, when three indications of order are used with respective weights equal to "3", "1", and "1", and they indicate vehicle unit orders as A-B-C, B-A-C, and B-A-C, respectively, the order may be provided as A-B-C (since A-B-C has cumulative weight "3" while B-A-C has cumulative weight "1"+"1").

The weighted approach enables prioritizing among the procedures for detection of order. For example, a particularly reliable/accurate procedure may be given higher weight than other procedures.

The weights may be pre-determined, or may be dynamically variable. For example, the weight of a back-up procedure may be set to zero when any other procedure generates a result, and may be set to a non-zero value when no other procedure generates a result.

More generally, the weight for one or more procedure may be dynamically set to zero; depending on the result of at least two procedures for detection of order. Thus, based on some condition involving the result of at least two procedures for detection of order, the result of a single one of the at least two procedures may be selected.

The method **100** may also comprise determining, by the processor device, a dynamic model of the vehicle based on the detected order among the vehicle units, as illustrated by step **130.** The dynamic model of the vehicle may be used for vehicle control; e.g., for vehicle motion management on vehicle unit level.

In some examples, the method **100** is performed repeatedly. Thus, the order among the vehicle units may be repeatedly determined, and an update of the detected order may be provided in response thereto (e.g., for each order determination, or only when the detected order changes).

For example, the method **100** may be performed at pre-determined or dynamically changing time intervals. Alternatively or additionally, the method **100** may be performed responsive to a triggering event. Example events that may be used to trigger the method **100** to be performed include detection of addition/removal/change of a physical/virtual vehicle unit attachment, detection of inferior performance of the vehicle motion management, initiation of vehicle movement after a vehicle stop, completion of a loading/off-loading stop in a logistics scenario, reception of input which is useful for order determination (e.g., a distinguishable motion/environmental data event), etc.

For repeating execution of the method **100,** step **110** may comprise determining only one indication of order among the vehicle units, and an indication of order determined earlier by a different procedure for detection of order may be used to provide the at least two indications of order among the vehicle units.

The method **100** evaluates the status of the vehicle in relation to the order of vehicle units. A dynamic model of the vehicle may be determined accordingly, which may be used for control of the vehicle. Using at least two indications of order typically improves accuracy and/or robustness and/or reliability of the order determination (compared to using only one indications of order). The corresponding improvement of the dynamic model typically entails improved vehicle safety during operation.

**FIG. 1B** illustrates an example method **150** for detection (determination) of order among wheel axles of a vehicle; e.g., for automatic detection of order among wheel axles. The method may be applied to a single-unit vehicle, as well as to e multi-unit combination vehicle.

The method **150** may be a computer-implemented method, for execution by a processor device of a computer system. Typically, the processor device is mounted/mountable in the vehicle; e.g., in one of the vehicle units for a multi-unit combination vehicle. However, it should be understood that the processor device may be external to the vehicle in some scenarios. For example, the processor device may be comprised in a server node; e.g., as part of a wireless communication network, a cloud computing network, an autonomous drive control network, or similar.

The method **150** comprises providing, by the processor device, the detection of order among the wheel axles (determining, by the processor device, the order among the wheel axles) based on respective timing of corresponding vertical motion data from the wheel axles, as illustrated by step **165.** In some examples the wheel axles are assigned respective numbers corresponding to the detected order. The method **150** may also comprise obtaining the vertical motion data; e.g., receiving the vertical motion data from one or more sensors of the vehicle.

Some examples of vertical motion data include vertical acceleration, vertical load, vertical pressure, vertical force, vertical distance to ground, etc. A change in any if these metrics may be interpreted as an expression of vertical motion. For example, when climbing a bump, the vertical load and/or the vertical pressure may have a value which is higher than the nominal value experienced before the bump, and the value may be lower than the nominal value experienced before the bump when descending.

The vertical motion data may be obtained in any suitable way. For example, the vertical motion data from a wheel axle may pertain to one or more of: pressure sensor data of the wheel axles, vertical accelerometer data of the wheel axles, suspension data of the wheel axles, and distance sensor data of the wheel axles. Additionally or alternatively, the vertical motion data from a wheel axle may pertain to vertical motion of the wheel axle and/or vertical motion of one or more joint associated with the wheel axle.

Typically, the determination of order among wheel axles in **165** may be based on timing of distinguishable events of the vertical motion data (e.g., a distinct change in the vertical motion data, such as a vertical pressure event). For example, when a distinguishable event occurs earlier in time for a first wheel axle than for a second wheel axle, it may be determined that the second wheel axle occurs after the first wheel axle in the order of wheel axles. Thus, a second wheel axle may be indicated as occurring after a first wheel axle in the order, responsive to a timing delay between vertical motion data from the first wheel axle and corresponding vertical motion data from the second wheel axle. Alternatively or additionally, when a distinguishable event occurs for a first wheel axle but not for a second wheel axle, it may be determined that the second wheel axle is raised and is not included in the order among wheel axles.

Distinguishable events of the vertical motion data may occur, for example, responsive to passing uneven portions of a road. Example uneven portions of a road include a speed bump or other bump of the road, a pothole or other depression of the road, an obstacle on the road, and a road joint (e.g., an expansion joint, a bridge joint, etc.).

In some examples, the method **150** may be performed responsive to a triggering event, as illustrated by optional step **160.** Example events that may be used to trigger the method **150** to be performed include detection of addition/removal/change of a physical/virtual vehicle unit attachment, detection of inferior performance of the vehicle motion management, initiation of vehicle movement after a vehicle stop, completion of a loading/off-loading stop in a logistics scenario, reception of input which is useful for order determination (e.g., a distinguishable vertical motion data event), lowering/raising of a wheel axle of the vehicle, etc. Thus, the detection of order among wheel axles in **165** may be performed responsive to lowering or raising a wheel axle of the vehicle.

The method **150** may also comprise determining, by the processor device, an order among vehicle units of a multi-unit combination vehicle, as illustrated by optional step **170.**

The order among vehicle units may be determined based on respective timing of corresponding vertical motion data from the wheel axles of the vehicle units; e.g., similarly to what has already been described for **112** of **FIG. 1A****.** Thus, typically, the determination of order among vehicle units in **170** may be based on timing of distinguishable events of the vertical motion data. For example, when a distinguishable event occurs earlier in time for a first vehicle unit than for a second vehicle unit, it may be determined that the second vehicle unit occurs after the first vehicle unit in the order of vehicle units.

Alternatively or additionally, the order among vehicle units may be determined based on the detected order among wheel axles. For example, the detected order among wheel axles and information about which vehicle unit a wheel axle belongs to may be used to deduce the order among vehicle units.

In some examples, the method **150** may be combined with the method **100** of **FIG. 1A** such that step **170** is comprised in sub-step **112** of **FIG. 1A****.**

The method **150** may also comprise determining, by the processor device, a dynamic model of the vehicle based on the detected order among the wheel axles and/or the detected order among vehicle units, as illustrated by step **175.** The dynamic model of the vehicle may be used for vehicle control; e.g., for vehicle motion management on vehicle unit level. When the method **150** is combined with the method **100** of **FIG. 1A****,** step **175** may be merged with step **130** of **FIG. 1A****.**

In some examples, the method **150** comprises triggering, by the processor device, collection of vertical motion data, as illustrated by optional step **180.** Triggering of collection of vertical motion data may coincide with triggering of detection of order among wheel axles, or they may be separately triggered. Thus, the collection of data may be triggered in **180** when there is an opportunity to collect useful data (e.g., when there is an upcoming speed bump), while the detection of order among wheel axles may be triggered in **160** at a later time (e.g., when enough data has been collected for reliable detection). The triggering in **180** may be responsive to identification, by a forward-facing sensor of the vehicle, of an upcoming road unevenness; e.g., a speed bump, a pothole, an obstacle on the road, or similar. Alternatively or additionally, collection of vertical motion data may be triggered based on road map data identifying upcoming road unevenness.

When the steering angle is relatively large, the vertical motion data may be unsuitable, or at least not optimal, for order detection. For example, during a turn, the different wheel axles may not follow the same path. Therefore, the different wheel axles may experience road unevenness differently, and corresponding vertical motion data may be misleading.

In some examples, this is addressed by only using vertical motion data, which is collected under conditions where a steering angle of the vehicle is smaller than a first steering angle threshold.

Alternatively or additionally, the method may comprise compensating, by the processor device, vertical motion data collected under conditions where a steering angle of the vehicle is larger than a second steering angle threshold, as illustrated by optional step **185.** This is particularly helpful when there is a lack of vertical motion data for small steering angles (e.g., the only bump in a relatively long road portion occurs in a turn of the road).

The compensation may comprise taking into account the fact that different wheel pairs may travel along quite different paths when the steering angle of the vehicle relatively large. For example, expectations regarding similarities of the vertical motion data profiles of different wheel pairs may be relaxed; e.g., since it cannot be expected that all wheel pairs traverse an unevenness of the road in the same manner when the steering angle of the vehicle relatively large. Alternatively or additionally, that a wheel pair does not exhibit vertical motion to the same extent as other wheel pairs (or at all) may not be directly regarded as an indication to conclude that that wheel axle is raised; e.g., since it cannot be expected that an unevenness of the road is traversed by all wheel pairs when the steering angle of the vehicle relatively large. Thus, vertical motion data might be used to determine an order among wheel axles that exhibit vertical motion when the steering angle of the vehicle relatively large, but conclusions regarding wheel axles being raised might be avoided (or at least regarded as less reliable).

The first and second steering angle threshold may have the same or different values.

The steering angle can be determined as the actual steering angle (i.e., retroactively to the collection of vertical motion data) or as a predicted steering angle (e.g., using a forward-facing sensor or map data). In the latter case, the steering angle may be used as a triggering condition for collection of vertical motion data in **180.**

In some examples, the method **150** is performed repeatedly. Thus, the order among the wheel axles may be repeatedly detected/updated.

For example, the method **150** may be performed at pre-determined or dynamically changing time intervals. Alternatively or additionally, the method **150** may be performed responsive to a triggering event, as already discussed for **160.**

The method **150** evaluates the status of the vehicle in relation to the order of wheel axles (and possibly also in relation to the order of vehicle units). A dynamic model of the vehicle may be determined accordingly, which may be used for control of the vehicle. Using vertical motion data typically improves accuracy and/or robustness and/or reliability of the order detection (compared to not using vertical motion information). The corresponding improvement of the dynamic model typically entails improved vehicle safety during operation.

Hence, according to some examples, the method **150** relates to measurements of dynamic normal loads per wheel axle (e.g., by means of pressure sensors, accelerometers, distance sensors, suspension compression/extension, or similar). Road unevenness may provide excitation for execution of the method **150,** and it may be analyzed how a corresponding vertical event propagates through the vehicle wheel axles.

**FIG. 2** is a schematic drawing of an example multi-unit combination vehicle **200** (e.g., for cargo transport), wherein the herein disclosed techniques can be applied. The vehicle **200** comprises a tractor unit **210** (e.g., truck or towing vehicle), which is configured to tow one or more trailer unit(s) **211, 212, 213.**

The tractor unit **210** comprises a vehicle control unit (VCU) **290** - or other computer system comprising a processor device - configured to perform various vehicle control functions, such as path following and vehicle motion management.

The VCU **290** may be configured to perform one or more method steps of the method **100** of **FIG. 1A** and/or of the method **150** of **FIG. 1B****.** Thus, the order of vehicle units **210, 211, 212, 213** and/or the order of wheel axles **241, 242, 243, 244, 248, 249** may be detected for the vehicle **200** as already exemplified herein.

Although not shown, it should be understood that a VCU may be comprised - additionally or alternatively - in one or more of the trailer unit(s). Also alternatively or additionally, a control unit (e.g., a parametrized VCU) may be comprised in a remote server node to which the vehicle **200** may be connected via wireless link. Generally, approaches described herein (e.g., the method **100** of **FIG. 1A** and/or of the method **150** of **FIG. 1B****)** may be performed by any VCU or other control unit; alone or in combination. For example, steps **110** and **120** of **FIG. 1A** may be performed by the VCU **290** and step **130** of **FIG. 1A** may be performed remotely (e.g., by cloud computing).

A forward-facing sensor **235** of the tractor unit **210** may be used to identify upcoming road unevenness (compare with **180** of **FIG. 1B****).** Forward-facing sensors **231, 235** and/or backward-facing sensors **233** of the vehicle units may be used to capture environmental data and/or distinguish identifiers on preceding/succeeding vehicle units (compare with **114** of **FIG. 1A****).**

Communication wires **220** between the vehicle units may provide coupling data (compare with **116** of **FIG. 1A****).**

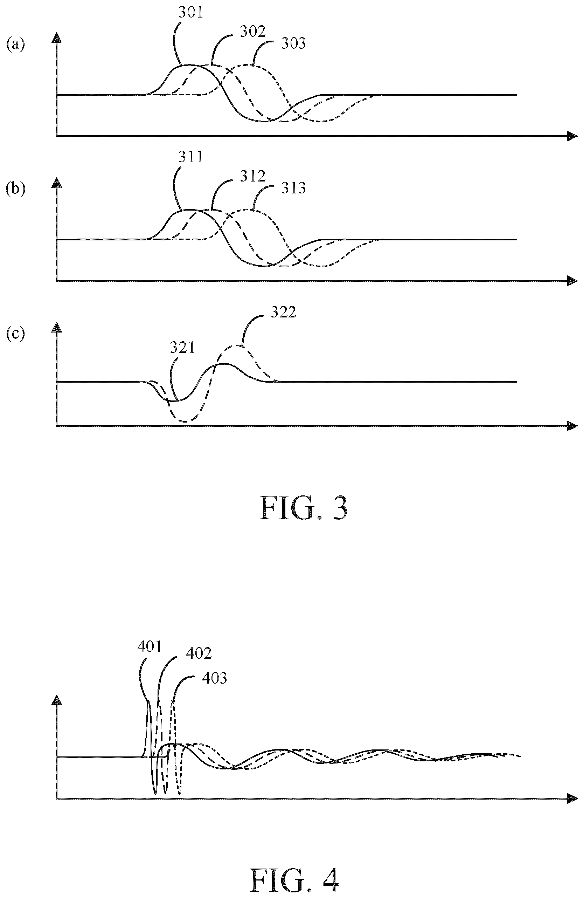

**FIG. 3** schematically illustrates example motion data relating to different vehicle units in timing diagrams. The motion data of **FIG. 3** may be applicable, for example, in **112** of **FIG. 1A****.**

Plot (a) shows yaw rate over time for a tractor unit **301,** a first trailer unit **302** and a second trailer unit **303.** A distinguishable yaw rate event is distributed in time for the different units, which enables determination of the order among the vehicle units, as described herein.

Plot (b) shows lateral acceleration over time for a tractor unit **311,** a first trailer unit **312** and a second trailer unit **313.** A distinguishable lateral acceleration event is distributed in time for the different units, which enables determination of the order among the vehicle units, as described herein.

Plot (c) shows articulation angle over time between a tractor unit and a first trailer unit **321** and between the first trailer unit and a second trailer unit **322.** A distinguishable articulation angle event is distributed in time for the different unit pairs, which enables determination of the order among the vehicle units, as described herein.

**FIG. 4** schematically illustrates example vertical motion data relating to different wheel axles in timing diagrams. The vertical motion data of **FIG. 4** may be applicable, for example, in **165** of **FIG. 1B****.**

The plot shows dynamic load over time for three different wheel axles **401, 402, 403.** A distinguishable dynamic load event is distributed in time for the different wheel axles, which enables determination of the order among the wheel axles, as described herein.

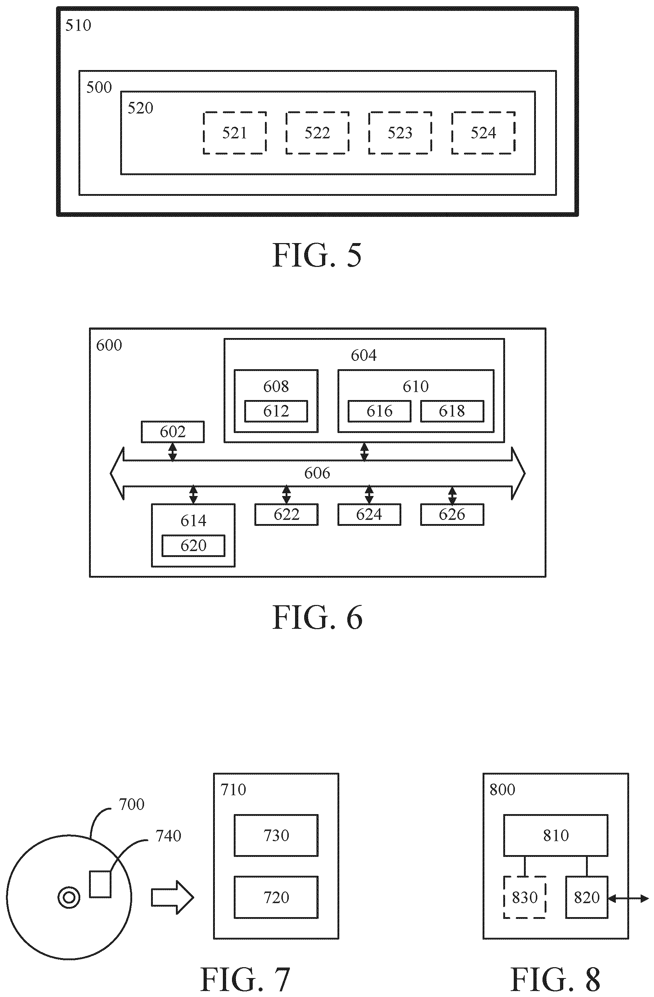

**FIG. 5** schematically illustrates an example apparatus **500.** The apparatus **500** is for detection of order among vehicle units of a multi-unit combination vehicle and/or for detection of order among wheel axles of a vehicle.

For example, the apparatus **500** may be comprised in a control system **510;** e.g., a VCU. Alternatively or additionally, the apparatus **500** may be configured to perform (or cause performance of) one or more method steps of the method **100** of **FIG. 1A** and/or of the method **150** of **FIG. 1B****.**

The apparatus **500** comprises a controller (e.g., controlling circuitry, control module, or control unit) **520.** For example, the controller **520** may be, may comprise, or may be comprised in, a processor device.

The controller **520** may be configured to cause determination of at least two indications of order among the vehicle units, wherein the indications of order are determined by different procedures for detection of order among the vehicle units (compare with **110** of **FIG. 1A** and **170** of **FIG. 1B****).**

To this end, the controller **520** may comprise one or more indication determiner (e.g., determining circuitry, determination module, or determination unit) **521.** The indication determiner **521** may be configured to determine the indications of order (e.g., as described in connection with one or more of **112, 114, 116** of **FIG. 1A****).**

Alternatively or additionally, the controller **520** may be configured to cause provision of the detection of order among the vehicle units (determination of order among the vehicle units) based on the at least two indications of order (compare with **120** of **FIG. 1A** and **170** of **FIG. 1B****).**

To this end, the controller **520** may comprise a provisioner (e.g., providing circuitry, provision module, or provision unit) **522.** The provisioner **522** may be configured to provide the detection of order among the vehicle units (e.g., as described in connection with one or more of **122, 124, 126** of **FIG. 1A****).** The provisioner **522** may be seen as an order determiner, and may be configured to determine the order among the vehicle units based on the at least two indications of order.

Yet alternatively or additionally, the controller **520** may be configured to cause provision of the detection of order among the wheel axles (determination of order among the wheel axles) based on respective timing of corresponding vertical motion data from the wheel axles (compare with **165** of **FIG. 1B****).**

To this end, the controller **520** may comprise a provisioner (e.g., providing circuitry, provision module, or provision unit) **523.** The provisioner **523** may be configured to provide the detection of order among the wheel axles. The provisioner **523** may be seen as an order determiner, and may be configured to determine the order among the wheel axles.

The controller **520** may be further configured to cause determination of a dynamic model of the vehicle based on the detected order among the vehicle units and/or based on the detected order among the wheel axles (compare with **130** of **FIG. 1A** and **175** of **FIG. 1B****).**

To this end, the controller **520** may comprise a model determiner (e.g., determining circuitry, determination module, or determination unit) **524.** The model determiner **524** may be configured to determine the dynamic model of the vehicle.

**FIG. 6** is a schematic diagram of a computer system **600** for implementing examples disclosed herein. The computer system **600** may be comprised - or comprisable - in a vehicle according to some examples.

For example, the computer system **600** may be configured to execute, or cause execution of, one or more of the method steps as described in connection with Figures 1A and 1B.

Alternatively or additionally, the computer system **600** may be configured to determine (e.g., by the processor device **602)** at least two indications of order among vehicle units of a multi-unit combination vehicle, wherein the indications of order are determined by different procedures for detection of order among the vehicle units, and provide (e.g., by the processor device **602)** a detection of order among the vehicle units based on the at least two indications of order.

Yet alternatively or additionally, the computer system **600** may be configured to provide (e.g., by the processor device **602)** a detection of order among wheel axles of a vehicle based on respective timing of corresponding vertical motion data from the wheel axles.

The computer system **600** is adapted to execute instructions from a computer-readable medium to perform these and/or any of the functions or processing described herein. The computer system **600** may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include a processor device **602** (may also be referred to as a control unit), a memory **604,** and a system bus **606.** The computer system **600** may include at least one computing device having the processor device **602.** The system bus **606** provides an interface for system components including, but not limited to, the memory **604** and the processor device **602.** The processor device **602** may include any number of hardware components for conducting data or signal processing or for executing computer code stored in memory **604.** The processor device **602** (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processor device **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with a processor device **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program product **620** stored on a transitory or non-transitory computer-usable or computer-readable storage medium (e.g., single medium or multiple media), such as the storage device **614,** which includes complex programming instructions (e.g., complex computer-readable program code) to cause the processor device **602** to carry out the steps described herein. Thus, the computer-readable program code can comprise software instructions for implementing the functionality of the examples described herein when executed by the processor device **602.** The processor device **602** may serve as a controller or control system for the computer system **600** that is to implement the functionality described herein.

The computer system **600** also may include an input device interface **622** (e.g., input device interface and/or output device interface). The input device interface **622** may be configured to receive input and selections to be communicated to the computer system **600** when executing instructions, such as from a keyboard, mouse, touch-sensitive surface, etc. Such input devices may be connected to the processor device **602** through the input device interface **622** coupled to the system bus **606** but can be connected through other interfaces such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may also include a communications interface **626** suitable for communicating with a network as appropriate or desired.

The operational steps described in any of the exemplary aspects herein are described to provide examples and discussion. The steps may be performed by hardware components, may be implemented in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 7** illustrates an example computer readable medium in the form of a compact disc (CD) ROM **700.** The computer readable medium has stored thereon a computer program **740** comprising program instructions. The computer program is loadable into a data processor (e.g., a data processing unit) **720,** which may, for example, be comprised in a vehicle control unit **710.** When loaded into the data processor, the computer program may be stored in a memory **730** associated with, or comprised in, the data processor. According to some examples, the computer program may, when loaded into, and run by, the data processor, cause execution of method steps according to, for example, any of the methods described herein.

**FIG. 8** schematically illustrates, in terms of a number of functional units, the components of a control unit **800** according to some examples. The control unit may be comprised in a vehicle, e.g., in the form of a vehicle motion management (VMM) unit. A processor device in the form of processing circuitry **810** is provided using any combination of one or more of a suitable central processing unit (CPU), multiprocessor, microcontroller, digital signal processor (DSP), or similar; capable of executing software instructions stored in a computer program product, e.g. in the form of a storage medium **830.** The processing circuitry **810** may further be provided as at least one application specific integrated circuit ASIC, or field programmable gate array FPGA.

Particularly, the processing circuitry **810** is configured to cause the control unit **800** to perform a set of operations, or steps; for example, any one or more of the methods discussed in connection to **FIG. 1A** and **FIG. 1B****.**

For example, the storage medium **830** may store a set of operations, and the processing circuitry **810** may be configured to retrieve the set of operations from the storage medium **830** to cause the control unit **800** to perform the set of operations. The set of operations may be provided as a set of executable instructions. Thus, the processing circuitry **810** is thereby arranged to execute methods as herein disclosed.

The storage medium **830** may comprise persistent storage, which, for example, can be any single one or combination of magnetic memory, optical memory, solid state memory or even remotely mounted memory.

The control unit **800** may further comprise an interface **820** for communication with at least one external device. As such, the interface **820** may comprise one or more transmitters and receivers, comprising analogue and digital components and a suitable number of ports for wireline or wireless communication.

The processing circuitry **810** controls the general operation of the control unit **800,** e.g., by sending data and control signals to the interface **820** and the storage medium **830,** by receiving data and reports from the interface **820,** and by retrieving data and instructions from the storage medium **830.** Other components, as well as the related functionality, of the control node are omitted in order not to obscure the concepts presented herein.

In some examples, the control unit **800** may be seen as a control system, or may be comprised in a control system. Such a control system may, for example, comprise the apparatus **500** as described in connection with **FIG. 5** (e.g., the processing circuitry **810** may comprise the controller **520** of **FIG. 5****).**

The control system may be configured for vehicle motion management (VMM). In some examples, the control system is configured to individually control vehicle units and/or vehicle axles and/or wheels of a multi-unit combination vehicle via a dynamic model of the vehicle, which is based on a detected order among vehicle units and/or a detected order among wheel axles.

For example, the VCU **290** of **FIG. 2** may comprise one or more of the apparatus **500** of **FIG. 5****,** the control system **510** of **FIG. 5****,** the computer system **600** of **FIG. 6****,** the vehicle control unit **710** of **FIG. 7****,** and the control unit **800** of **FIG. 8****.**

It should be noted that a feature or advantage mentioned herein in relation to one of the figures may be equally applicable, as suitable, to any other one of the figures; even if not mentioned explicitly in relation thereto.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the figures. It will be understood that these terms and those discussed above are intended to encompass different orientations of the device in addition to the orientation depicted in the figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

Reference has been made herein to various examples. However, a person skilled in the art would recognize numerous variations to the described examples that would still fall within the scope of the claims.

For example, the methods described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the examples disclosed herein may be applied to any other example, wherever suitable. Likewise, any advantage of any of the examples may apply to any other examples.

It is to be understood that the present disclosure is not limited to the aspects described above and illustrated in the drawings; rather, the skilled person will recognize that many changes and modifications may be made within the scope of the present disclosure as defined by the appended claims. In the drawings and specification, there have been disclosed aspects for purposes of illustration only and not for purposes of limitation, the scope of the invention being set forth in the following claims.

## Claims

1. A computer-implemented method for detection of order among vehicle units (210, 211, 212, 213) of a multi-unit combination vehicle (200), for execution by a processor device (290) of a computer system, the method comprising:
determining (110), by the processor device, at least two indications of order among the vehicle units, wherein the indications of order are determined by different procedures (112, 114, 116) for detection of order among the vehicle units, wherein the procedures for detection of order are associated with respective weights; and
providing (120), by the processor device, the detection of order among the vehicle units based on the at least two indications of order, wherein providing the detection of order comprises:
determining (124) a cumulative weight for each order that occurs among the indications of order; and
selecting (126) an order that has the highest cumulative weight.

2. The method of claim 1, wherein one of the procedures (112) for detection of order comprises indicating the order among the vehicle units based on respective timing of corresponding motion data from the vehicle units.

3. The method of claim 2, wherein a second vehicle unit is indicated as occurring after a first vehicle unit in the order responsive to a timing delay between motion data from the first vehicle unit and corresponding motion data from the second vehicle unit.

4. The method of any of claims 2 through 3, wherein the motion data from a vehicle unit pertains to one or more of: lateral acceleration of the vehicle unit, lateral retardation of the vehicle unit, longitudinal acceleration of the vehicle unit, longitudinal retardation of the vehicle unit, yaw rate of the vehicle unit, and articulation angle of the vehicle unit in relation to another - preceding or subsequent - vehicle unit.

5. The method of any of claims 1 through 4, wherein one of the procedures (114) for detection of order comprises indicating the order among the vehicle units based on environmental data captured by respective sensors (231, 233, 235) mounted on the vehicle units.

6. The method of claim 5, wherein a second vehicle unit is indicated as occurring after a first vehicle unit in the order responsive to a timing delay between occurrence of an event in the environmental data from the first vehicle unit and occurrence of the event in the environmental data from the second vehicle unit.

7. The method of any of claims 5 through 6, wherein a second vehicle unit is indicated as occurring after a first vehicle unit in the order responsive to detection of an identifier of the first vehicle unit by a forward-facing sensor of the second vehicle unit, and/or wherein a first vehicle unit is indicated as occurring before a second vehicle unit in the order responsive to detection of an identifier of the second vehicle unit by a backward-facing sensor of the first vehicle unit.

8. The method of any of claims 1 through 7, wherein one of the procedures (116) for detection of order comprises indicating the order among the vehicle units based on coupling data of communication wires (220) between the vehicle units.

9. The method of claim 8, wherein a second vehicle unit is indicated as occurring after a first vehicle unit in the order responsive to the coupling data of a communication wire between the first and second vehicle units indicating the first vehicle unit as leading unit and/or indicating the second vehicle unit as following unit.

10. The method of any of claims 1 through 9, further comprising determining (130), by the processor device, a dynamic model of the vehicle based on the detected order among the vehicle units.

11. A computer program product comprising program code (740) for performing, when executed by the processor device, the method of any of claims 1 through 10.

12. A non-transitory computer-readable storage medium (700) comprising instructions, which when executed by the processor device (720), cause the processor device to perform the method of any of claims 1 through 10.

13. An apparatus (500) for detection of order among vehicle units (210, 211, 212, 213) of a multi-unit combination vehicle (200), the apparatus comprising controlling circuitry (520) configured to cause:
determination of at least two indications of order among the vehicle units, wherein the indications of order are determined by different procedures for detection of order among the vehicle units, wherein the procedures for detection of order are associated with respective weights; and
provision of the detection of order among the vehicle units based on the at least two indications of order, wherein the provision of the detection of order comprises:
determination of a cumulative weight for each order that occurs among the indications of order; and
selection of an order that has the highest cumulative weight.

14. The apparatus of claim 13, wherein the controlling circuitry comprises:
a determiner (521) configured to determine the at least two indications of order among the vehicle units; and
a provisioner (522) configured to provide the detection of order among the vehicle units based on the at least two indications of order.

15. A control system (510) comprising the apparatus of any of claims 13 through 14,
wherein the control system is configured to individually control vehicle units (210, 211, 212, 213) of a multi-unit combination vehicle (200) via a dynamic model of the vehicle, which is based on the detected order among the vehicle units.

16. A vehicle unit (210) comprising the control system of claim 15.

17. A multi-unit combination vehicle (200) comprising the control system of claim 15.

## Patentansprüche

1. Ein computerimplementiertes Verfahren zur Erkennung der Reihenfolge unter Fahrzeugen (210, 211, 212, 213) eines Mehrfacheinheiten-Kombinationsfahrzeugs (200), zur Ausführung durch eine Prozessoreinheit (290) eines Computersystems, wobei das Verfahren Folgendes umfasst:
Bestimmen (110) durch die Prozessoreinheit mindestens zweier Anzeichen für die Reihenfolge zwischen den Fahrzeugen, wobei die Anzeichen für die Reihenfolge durch verschiedene Verfahren (112, 114, 116) zur Erkennung der Reihenfolge zwischen den Fahrzeugen bestimmt werden, wobei die Verfahren zur Erkennung der Reihenfolge jeweils mit einem Gewicht verbunden sind; und
Bereitstellen (120) durch die Prozessoreinheit der Erkennung der Reihenfolge zwischen den Fahrzeugen basierend auf den mindestens zwei Anzeichen für die Reihenfolge, wobei das Bereitstellen der Erkennung der Reihenfolge Folgendes umfasst:
Bestimmen (124) eines kumulativen Gewichts für jede Reihenfolge, die auftritt. unter den Anzeichen für die Reihenfolge; und
Auswählen (126) einer Reihenfolge, die das höchste kumulative Gewicht aufweist.

2. Das Verfahren nach Anspruch 1, wobei ein Verfahren (112) zur Erkennung der Reihenfolge die Anzeige der Reihenfolge unter den Fahrzeugkomponenten umfasst, die auf der Grundlage der jeweiligen Zeitpunktinformationen von entsprechenden Bewegungsinformationen von den Fahrzeugkomponenten basiert.

3. Das Verfahren nach Anspruch 2, wobei eine zweite Fahrzeugkomponente als nach einer ersten Fahrzeugkomponente in der Reihenfolge angeordnet ist, und zwar in Abhängigkeit von einer Zeitverzögerung zwischen Bewegungsinformationen von der ersten Fahrzeugkomponente und entsprechenden Bewegungsinformationen von der zweiten Fahrzeugkomponente.

4. Das Verfahren nach einem der Ansprüche 2 bis 3, wobei die Bewegungsinformationen von einer Fahrzeugkomponente einer oder mehreren von Folgendem betreffen: laterale Beschleunigung der Fahrzeugkomponente, laterale Verzögerung der Fahrzeugkomponente, Längsbeschleunigung der Fahrzeugkomponente, Längsverzögerung der Fahrzeugkomponente, Gierrate der Fahrzeugkomponente und Lenkwinkel der Fahrzeugkomponente. die Fahrzeugkomponente in Bezug auf eine andere - vorhergehende oder nachfolgende - Fahrzeugkomponente.

5. Das Verfahren nach einem der Ansprüche 1 bis 4, wobei eine der Verfahrensschritte (114) zur Erkennung der Reihenfolge die Reihenfolge der Fahrzeugkomponenten basierend auf Umweltdaten umfasst, die von jeweiligen Sensoren (231, 233, 235) erfasst werden, die an den Fahrzeugkomponenten angebracht sind.

6. Das Verfahren nach Anspruch 5, wobei eine zweite Fahrzeugkomponente als nach einer ersten Fahrzeugkomponente in der Reihenfolge angeordnet ist, und zwar als Reaktion auf eine Zeitverzögerung zwischen dem Auftreten eines Ereignisses in den Umweltdaten von der ersten Fahrzeugkomponente und dem Auftreten des Ereignisses in den Umweltdaten von der zweiten Fahrzeugkomponente.

7. Das Verfahren nach einem der Ansprüche 5 bis 6, wobei eine zweite Fahrzeugkomponente als das als Reaktion auf die Erkennung eines Identifikators der ersten Fahrzeugkomponente durch einen nach vorne gerichteten Sensor der zweiten Fahrzeugkomponente auftritt. Komponente, und/oder wobei eine erste Fahrzeugkomponente als vor einer zweiten Fahrzeugkomponente in der Reihenfolge angezeigt wird, als Reaktion auf die Erkennung eines Identifikators der zweiten Fahrzeugkomponente. Einheit durch einen nach hinten gerichteten Sensor der ersten Fahrzeugeinheit.

8. Das Verfahren nach einem der Ansprüche 1 bis 7, wobei eine der Verfahrensschritte (116) zur Erkennung der Reihenfolge die Anzeige der Reihenfolge unter den Fahrzeugeinheiten umfasst, basierend auf Kopplungsdaten von Kommunikationsleitungen (220) zwischen den Fahrzeugeinheiten.

9. Das Verfahren nach Anspruch 8, wobei eine zweite Fahrzeugeinheit als nach einer ersten Fahrzeugeinheit in der Reihenfolge angeordnet ist, und zwar als Reaktion auf die Kopplungsdaten einer Kommunikationsleitung zwischen der ersten und der zweiten Fahrzeugeinheit, wobei die Kopplungsdaten angeben, dass die erste Fahrzeugeinheit die führende Einheit ist, und/oder angeben, dass die zweite Fahrzeugeinheit die folgende Einheit ist.

10. Verfahren nach einem der Ansprüche 1 bis 9, das ferner das Ermitteln (130) durch die Prozessorvorrichtung eines dynamischen Modells des Fahrzeugs auf der Grundlage der erfassten Reihenfolge unter den Fahrzeugeinheiten umfasst.

11. Ein Computerprogrammprodukt, das Programmcodes (740) umfasst, um, wennes von der Prozessoreinheit ausgeführt wird, die Methode gemäß einem der Ansprüche 1 bis 10 auszuführen.

12. Ein nicht-flüchtiges, computerlesbares Speichermedium (700), das Anweisungen umfasst, die, wenn sie von der Prozessoreinheit (720) ausgeführt werden, die Prozessoreinheit dazu veranlassen, die Methode gemäß einem der Ansprüche 1 bis 10 auszuführen.

13. Eine Vorrichtung (500) zur Erkennung der Reihenfolge zwischen Fahrzeugeinheiten (210, 211, 212, 213) eines Mehrfahrzeugeinsatzfahrzeugs (200), wobei die Vorrichtung eine Steuerschaltung (520) umfasst, die so konfiguriert ist, dass sie Folgendes bewirkt:
Bestimmung von mindestens zwei Anzeichen für die Reihenfolge zwischen den Fahrzeugeinheiten, wobei die Anzeichen für die Reihenfolge durch unterschiedliche Verfahren zur Erkennung der Reihenfolge zwischen den Fahrzeugeinheiten bestimmt werden, wobei die Verfahren zur Erkennung der Reihenfolge mit jeweiligen Gewichtungen assoziiert sind; und
Bereitstellung der Erkennung der Reihenfolge zwischen den Fahrzeugeinheiten basierend auf den mindestens zwei Anzeichen für die Reihenfolge, wobei die Bereitstellung der Erkennung der Reihenfolge Folgendes umfasst:
Bestimmung einer kumulativen Gewichtung für jede Reihenfolge, die unter den Anzeichen für die Reihenfolge auftritt; und
Auswahl einer Reihenfolge, die die höchste kumulative Gewichtung hat.

14. Die Vorrichtung nach Anspruch 13, wobei die Steuerschaltung Folgendes umfasst:
einen Determinator (521), der so konfiguriert ist, dass er die mindestens zwei Anzeichen für die Reihenfolge zwischen den Fahrzeugeinheiten bestimmt; und
einen Bereitsteller (522), der so konfiguriert ist, dass er die Erkennung der Reihenfolge zwischen den Fahrzeugeinheiten basierend auf den mindestens zwei Anzeichen für die Reihenfolge bereitstellt.

15. Ein Steuersystem (510), das die Vorrichtung nach einem der Ansprüche 13 bis 14 umfasst. wobei das Steuersystem so konfiguriert ist, dass es einzelne Fahrzeugkomponenten (210, 211, 212, 213) eines Mehrkomponenten-Fahrzeugkombinats (200) über ein dynamisches Modell des Fahrzeugs steuert, das auf der erkannten Reihenfolge unter den Fahrzeugkomponenten basiert.

16. Eine Fahrzeugkomponente (210), die das Steuersystem nach Anspruch 15 umfasst.

17. Ein Mehrkomponenten-Fahrzeugkombinat (200), das das Steuersystem nach Anspruch 15 umfasst.

## Revendications

1. Un procédé mis en œuvre par ordinateur pour la détection de l'ordre parmi des unités de véhicule (210, 211, 212, 213) d'un véhicule combiné à unités multiples (200), pour exécution par un dispositif processeur (290) d'un système informatique, le procédé comprenant :
déterminer (110), par le dispositif processeur, au moins deux indications de l'ordre parmi les unités de véhicule, dans lequel les indications de l'ordre sont déterminées par différentes procédures (112, 114, 116) pour la détection de l'ordre parmi les unités de véhicule, dans lequel les procédures pour la détection de l'ordre sont associées à des poids respectifs ; et
fournir (120), par le dispositif processeur, la détection de l'ordre parmi les unités de véhicule sur la base des au moins deux indications de l'ordre, dans lequel fournir la détection de l'ordre comprend :
déterminer (124) un poids cumulatif pour chaque ordre qui se produit parmi les indications de l'ordre ; et
sélectionner (126) un ordre qui a le poids cumulatif le plus élevé.

2. Le procédé de la revendication 1, dans lequel l'une des procédures (112) pour la détection de l'ordre comprend indiquer l'ordre parmi les unités de véhicule sur la base du minutage respectif de données de mouvement correspondantes provenant des unités de véhicule.

3. Le procédé de la revendication 2, dans lequel une seconde unité de véhicule est indiquée comme se produisant après une première unité de véhicule dans l'ordre en réponse à un retard temporel entre des données de mouvement provenant de la première unité de véhicule et des données de mouvement correspondantes provenant de la seconde unité de véhicule.

4. Le procédé de l'une quelconque des revendications 2 à 3, dans lequel les données de mouvement provenant d'une unité de véhicule se rapportent à un ou plusieurs parmi : l'accélération latérale de l'unité de véhicule, le ralentissement latéral de l'unité de véhicule, l'accélération longitudinale de l'unité de véhicule, le ralentissement longitudinal de l'unité de véhicule, le taux de lacet de l'unité de véhicule, et l'angle d'articulation de l'unité de véhicule par rapport à une autre - précédente ou subséquente - unité de véhicule.

5. Le procédé selon l'une quelconque des revendications 1 à 4, dans lequel l'une des procédures (114) pour la détection de l'ordre comprend l'indication de l'ordre parmi les unités de véhicule sur la base de données environnementales capturées par des capteurs respectifs (231, 233, 235) montés sur les unités de véhicule.

6. Le procédé selon la revendication 5, dans lequel une seconde unité de véhicule est indiquée comme se produisant après une première unité de véhicule dans l'ordre en réponse à un délai temporel entre la survenue d'un événement dans les données environnementales provenant de la première unité de véhicule et la survenue de l'événement dans les données environnementales provenant de la seconde unité de véhicule.

7. Le procédé selon l'une quelconque des revendications 5 à 6, dans lequel une seconde unité de véhicule est indiquée comme se produisant après une première unité de véhicule dans l'ordre en réponse à la détection d'un identifiant de la première unité de véhicule par un capteur orienté vers l'avant de la seconde unité de véhicule, et/ou dans lequel une première unité de véhicule est indiquée comme se produisant avant une seconde unité de véhicule dans l'ordre en réponse à la détection d'un identifiant de la seconde unité de véhicule par un capteur orienté vers l'arrière de la première unité de véhicule.

8. Le procédé selon l'une quelconque des revendications 1 à 7, dans lequel l'une des procédures (116) pour la détection de l'ordre comprend l'indication de l'ordre parmi les unités de véhicule sur la base de données de couplage de fils de communication (220) entre les unités de véhicule.

9. Le procédé selon la revendication 8, dans lequel une seconde unité de véhicule est indiquée comme se produisant après une première unité de véhicule dans l'ordre en réponse aux données de couplage d'un fil de communication entre les première et seconde unités de véhicule indiquant la première unité de véhicule comme unité de tête et/ou indiquant la seconde unité de véhicule comme unité suiveuse.

10. Le procédé selon l'une quelconque des revendications 1 à 9, comprenant en outre le fait de déterminer (130), par le dispositif processeur, un modèle dynamique du véhicule sur la base de l'ordre détecté parmi les unités de véhicule.

11. Un produit programme d'ordinateur comprenant un code de programme (740) pour exécuter, lorsqu'il est exécuté par le dispositif processeur, le procédé selon l'une quelconque des revendications 1 à 10.

12. Un support de stockage non transitoire lisible par ordinateur (700) comprenant des instructions, qui, lorsqu'elles sont exécutées par le dispositif processeur (720), amènent le dispositif processeur à exécuter le procédé selon l'une quelconque des revendications 1 à 10.

13. Un appareil (500) pour la détection de l'ordre parmi des unités de véhicule (210, 211, 212, 213) de un véhicule combiné multi-unité (200), l'appareil comprenant une circuiterie de contrôle (520) configurée pour provoquer :
la détermination d'au moins deux indications de l'ordre parmi les unités de véhicule, dans lequel les indications de l'ordre sont déterminées par différentes procédures pour la détection de l'ordre parmi les unités de véhicule, dans lequel les procédures pour la détection de l'ordre sont associées à des poids respectifs ; et
la fourniture de la détection de l'ordre parmi les unités de véhicule sur la base des au moins deux indications de l'ordre, dans lequel la fourniture de la détection de l'ordre comprend :
la détermination d'un poids cumulatif pour chaque ordre qui se produit parmi les indications de l'ordre ; et
la sélection d'un ordre qui présente le poids cumulatif le plus élevé.

14. L'appareil selon la revendication 13, dans lequel la circuiterie de contrôle comprend :
un déterminateur (521) configuré pour déterminer les au moins deux indications de l'ordre parmi les unités de véhicule ; et
un fournisseur (522) configuré pour fournir la détection de l'ordre parmi les unités de véhicule sur la base des au moins deux indications de l'ordre.

15. Un système de contrôle (510) comprenant l'appareil selon l'une quelconque des revendications 13 à 14, dans lequel le système de contrôle est configuré pour contrôler individuellement des unités de véhicule (210, 211, 212, 213) d'un véhicule combiné multi-unités (200) via un modèle dynamique du véhicule, qui est basé sur l'ordre détecté parmi les unités de véhicule.

16. Une unité de véhicule (210) comprenant le système de contrôle de la revendication 15.

17. Un véhicule combiné multi-unités (200) comprenant le système de contrôle de la revendication 15.
